# FASCICULE DE BREVET EUROPEEN

(11) **EP 1 387 846 B1**
(45) Date de publication et mention de la délivrance du brevet: **22.03.2006**
(21) Numéro de dépôt: 02730399.9
(22) Date de dépôt: 13.05.2002
(51) Int. Cl.: C07F 5/02, C07B 53/00, C07B 31/00, C07C 29/143

(54) **CATALYSEUR POUR REDUCTION ENANTIOSELECTIVE DE CETONES**
KATALYSATOR FÜR ENANTIOSELEKTIVE REDUKTION VON KETONEN
CATALYST FOR ENANTIOSELECTIVE REDUCTION OF KETONES

(30) Priorité: 18.05.2001 FR 0106612
(43) Date de publication de la demande: 11.02.2004
(73) Titulaire: CENTRE NATIONAL DE LA RECHERCHE SCIENTIFIQUE (CNRS), 75016 Paris (FR)
(72) Inventeur: COURT, Jean, F-38660 LE TOUVET (FR); LOPEZ, Monique, F-38760 VARCES (FR)
(74) Mandataire: Bernasconi, Jean Raymond
(86) Numéro de dépôt international: PCT/FR2002/001602
(87) Numéro de publication internationale: WO 2002/094837

(56) Documents cités:
- MOLVINGER, K. ET AL: "Asymmetric reduction of acetophenone over heterogeneous oxazaborolidine catalysts" TETRAHEDRON: ASYMMETRY (2000), 11(11), 2263-2266, XP004205787
- CHEMICAL ABSTRACTS, vol. 132, no. 13, 27 mars 2000 (2000-03-27) Columbus, Ohio, US; abstract no. 167944, MOLVINGER, K. ET AL: "Asymmetric reduction and hydrogenation over heterogeneous catalysts prepared by reacting nickel-boride with norephedrine" XP002189084 & J. MOL. CATAL. A: CHEM. (1999), 150(1-2), 267-273,
- MOLVINGER, KARINE ET AL: "Enantioselective borane reduction of ketones with oxazaborolidines boron-bound to nickel boride nanoparticles" TETRAHEDRON LETT. (1999), 40(48), 8375-8378, XP004181322 cité dans la demande

## Description

La présente invention concerne un composé de type oxazaborolidine fixé sur un matériau choisi parmi le nickel de Raney, le cobalt de Raney et le fer de Raney, son procédé de préparation, et l'utilisation de ce composé en tant que catalyseur de réaction de réduction de cétone pour produire des alcools chiraux.

Les alcools chiraux sont souvent utilisés dans l'industrie pharmaceutique comme produits intermédiaires de synthèse d'actifs pharmaceutiques. Ainsi, la réduction énantiosélective de cétones prochirales conduisant à des alcools secondaires optiquement actifs correspondant est un sujet de grand intérêt.

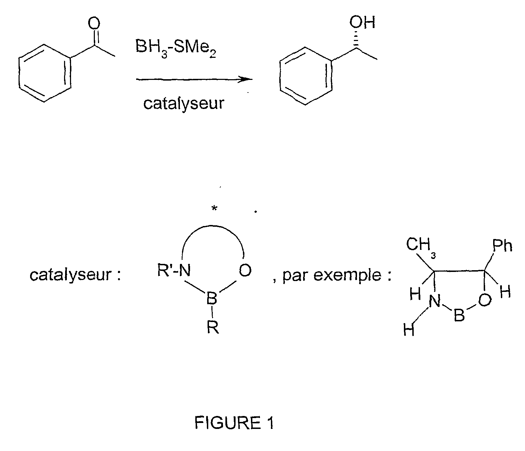

Généralement, le procédé comprend une étape de réduction faisant réagir une cétone prochirale avec un agent de réduction à base de bore en présence d'un catalyseur de type oxazaborolidine. L'agent de réduction à base de bore peut être le complexe diméthylsulfure-borane ou le complexe tétrahydrofurane-borane ou encore le complexe N,N-diéthylaniline-borane ou le complexe 1,4-thioxane-borane. Cette réaction est notamment représentée en figure 1. Selon une variante de ce procédé, l'oxazaborolidine est remplacée par son précurseur, un amino-alcool qui est transformé in situ, lors de la réduction, en oxazaborolidine.

La fixation de ces catalyseurs de type oxazaborolidine ou précurseurs à des polymères insolubles a déjà été décrite, cette fixation permettant au catalyseur d'être séparé de manière aisée du milieu réactionnel, et éventuellement d'être utilisé de nouveau. Différents amino-alcools chiraux ont été ainsi liés à des polystyrènes réticulés, puis transformés en des polystyrènes-oxazaborolidine (J. Chem. Soc. Perkin Trans.1, 345-349 (1995) ; Tetrahedron : asymmetry Vol. 6, No 11, pp. 2755-2766 (1995), Elsevier Science Ltd ; J. Chem. Soc. Perkin Trans. 1, 2887-2893, (1984)).

Le procédé de fixation d'oxazaborolidine sur des polymères, tels que les polystyrènes, est compliqué à mettre en oeuvre puisqu'il consiste généralement à réaliser quatre étapes. La dernière étape conduit à la formation d'eau qu'il est nécessaire de bien éliminer. En outre, un polymère organique favorise généralement la rétention et l'emprisonnement des molécules de réactifs ou de produits, aussi est-il souvent nécessaire de procéder à plusieurs extractions ou lavages dudit polymère. De plus, la réaction catalytique nécessite une agitation susceptible de dénaturer le polymère utilisé.

Les composés de type oxazaborolidine ont également été fixés sur des nanoparticules de nickel (Tetrahedron Letters 40 (1999) 8375-78). Le procédé de préparation de ces composés, qui aboutit à la formation de NiB₂, consiste en la réaction d'iodure de nickel avec le borohydrure de lithium, puis ensuite en un mélange de la suspension de NiB₂ dans un solvant avec la noréphédrine. Cependant, la séparation de ces composés utilisés à titre de catalyseur dans une réaction n'est pas toujours aisée.

Le but de la présente invention est donc de proposer un nouveau type de catalyseur utilisable dans la préparation d'alcools chiraux par réduction de cétones prochirales présentant des rendements et des excès énantiomériques satisfaisants.

Un autre but de la présente invention est de pouvoir disposer d'un catalyseur se séparant facilement du solvant contenant le produit obtenu et donc de pouvoir le réutiliser sans une perte importante de ses performances.

Ces buts et d'autres sont atteints par la présente invention qui concerne un composé de type oxazaborolidine fixé sur un matériau choisi parmi le nickel, le cobalt et le fer de Raney.

Lesdits matériaux sont accessibles à l'homme du métier. Ils se trouvent généralement sous forme de grains de Raney de 1000 à 10 000 Å de diamètre qui correspondent à des agglomérats de cristallites de 70 à 80 Å de diamètre.

De préférence, le matériau est le nickel de Raney.

Plus spécifiquement, ce composé de type oxazaborolidine présente la formule (I) suivante : Ni₅B₁₋ₓ(oxaza)ₓ où x est un nombre réel compris exclusivement entre 0 et 0,5 et oxaza présente la formule suivante : 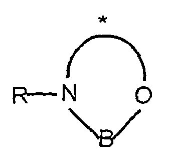 dans laquelle les atomes d'azote et d'oxygène sont reliés, d'une part, par un atome de bore et, d'autre part, par un groupement hydrocarboné, l'étoile correspond à la présence d'au moins un carbone asymétrique dans ledit groupement hydrocarboné, et R représente un atome d'hydrogène ou un radical alkyle, éventuellement le radical représenté par R correspond à un cycle hydrocarboné attaché au groupement hydrocarboné reliant les atomes d'azote et d'oxygène.

Les radicaux hydrocarbonés les plus utilisés sont les radicaux alkyles, aryles, ou aralkyles.

Par radical alkyle, on entend un groupement hydrocarboné saturé, linéaire, ramifié ou cyclique contenant de 1 à 8 atomes de carbone. On peut notamment citer à titre de radicaux alkyles, les radicaux méthyle, éthyle, 2-propyle, 1-butyle, néopentyle (2,2-diméthyl-1-propyl), 1-héxyle, cyclohéxyle, cyclopentylméthyle, tert-octyle (1,1,3,3-tetraméthyl-1-butyl).

Par aryle, on entend notamment le radical phényle ou β-naphtyle, éventuellement substitué par au moins un substituant choisi parmi un radical alkyle, alkyloxy et un atome d'halogène.

Par aralkyle, on entend selon l'invention notamment Ω-aryle-alkyle, où le radical aryle et le radical alkyle sont tels que définis ci-dessus.

Le groupement hydrocarboné reliant les atomes d'azote et d'oxygène est de préférence un radical alkyle en C₂ substitué par au moins un radical alkyle ou aryle.

Des groupements oxaza sont notamment décrits dans les publications citées antérieurement. Ils sont également décrits dans les brevets US 4 943 635, US 6 005 133, US 6 037 505, 6 025 531.

De préférence, le groupement oxaza est choisi parmi les groupements de formules suivantes : 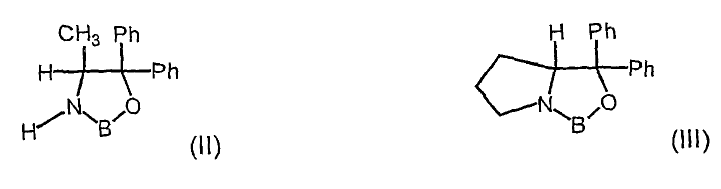 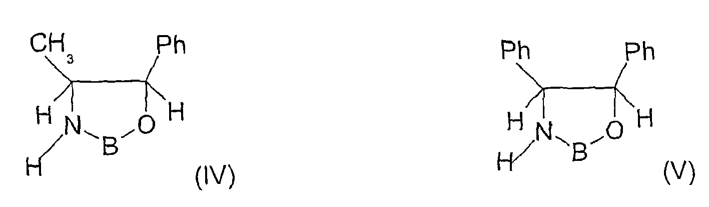 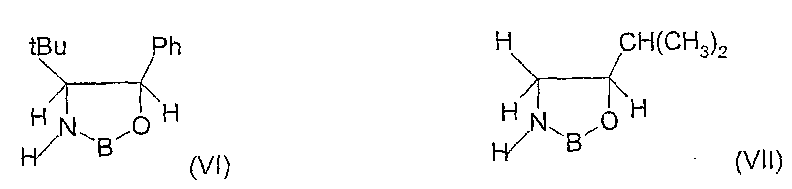 où Ph représente le radical phényl et tBu représente le radical tertiobutyle.

Avantageusement, le groupement oxaza est choisi parmi les groupements de formules (IV), (V), (VI) et (VII).

Le composé de type oxazaborolidine selon l'invention présente des caractéristiques ferro-magnétiques qui lui permettent d'être facilement séparé du milieu réactionnel lorsqu'il est utilisé notamment à titre de catalyseur dans une réaction de réduction de cétone prochirale.

A titre de comparaison, les nanoparticules de nickel ayant réagi avec le bore ne présentent pas de caractéristiques ferro-magnétiques. Ainsi, aucun effet n'est observé sur ces particules lors de l'application d'un champ magnétique.

Le composé de type oxazaborolidine peut être également séparé du milieu réactionnel dans lequel il se trouve par simple décantation.

La présente invention concerne en outre un procédé de préparation du composé selon l'invention qui comprend les étapes suivantes :
- (1) le matériau choisi parmi le nickel de Raney, le cobalt de Raney et le fer de Raney est mis en contact avec BH₃ en présence d'un solvant inerte,
- (2) le produit ainsi obtenu est mis en contact avec au moins un amino-alcool.

De préférence, le matériau utilisé est le nickel de Raney.

La température des étapes (1) et (2) selon l'invention peut varier dans une large mesure. Elle est généralement comprise entre 0 et 60°C. De préférence, la température mise en oeuvre correspond à la température ambiante (de 20 à 30 °C).

On opère de préférence pour les étapes (1) et (2) sous atmosphère inerte, telle que notamment l'azote ou l'argon.

Le solvant inerte de la première réaction est plus particulièrement choisi parmi le dioxane, le diéthyléther, le tétrahydrofurane, l'hexane, l'heptane, l'octane, le cyclohexane, le benzène, le xylène et le toluène. De préférence, on utilise le tétrahydrofurane ou le diéthyléther.

L'étape (2) est de préférence mise en oeuvre dans un solvant, tel que notamment un de ceux spécifiés ci-dessus.

Plus précisément, l'amino-alcool utilisé a pour formule générale (VIII) 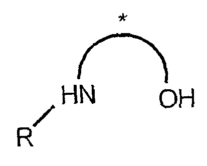 dans laquelle le groupement hydrocarboné reliant les atomes d'azote et d'oxygène et R sont tels que définis ci-dessus.

De préférence, ces amino-alcools sont choisis parmi les β-amino-alcools tels que le α-diphényl-pyrolidineméthanol, la noréphédrine (+) ou (-), le 2-amino-3-méthyl-1-butanol (S ou R) ; le 2-amino-1,2-diphényléthanol(1R,2S) ou (1S,2R) ; le 2-amino-1,1-diphényl-1-propanol (S ou R) et le 2-amino-3,3-diméthyl-1-butanol (S ou R).

De préférence, avant la réaction de BH₃ avec le matériau, on réalise une réaction entre ledit matériau et un ion BH₄⁻, notamment sous forme de borohydrure de lithium.

Les quantités des réactifs peuvent varier dans une large mesure.

De préférence, la quantité de BH₃ utilisée est telle que le nombre d'atomes de nickel, de cobalt ou de fer à la surface accessible à un réactif du composé obtenu soit minimum. Cette quantité varie en fonction de la surface spécifique du matériau utilisé. Pour donner un ordre de grandeur, avantageusement le rapport "molécule de BH₃/atome de nickel, cobalt ou fer de surface" varie entre 0,5 et 5.

La présente invention a également trait à l'utilisation du composé selon l'invention en tant que catalyseur d'une réaction de réduction de cétone prochirale pour produire des alcools chiraux.

Ainsi, le procédé de réduction comprend un traitement d'une cétone prochirale, qui doit être réduite en un alcool optiquement actif, avec un agent de réduction à base de bore, en présence d'une quantité catalytiquement efficace d'un catalyseur correspondant au composé selon la présente invention.

Par quantité catalytiquement efficace d'un composé, on entend une quantité sous-stoechiométrique qui est suffisante pour faciliter la transformation d'un réactif désiré en un ou des produits.

Par excès énantiomérique (e.e.), on entend l'excès d'un des deux énantiomères sur l'autre habituellement exprimé en pourcentage. Ainsi, un excès énantiomérique de 90 % correspond à la présence de 95 % d'un énantiomère et de 5 % de l'autre dans le mélange en question.

Par cétone prochirale, notamment représenté par la formule R_{S}R_{L}CO, un composé présentant une fonction cétone dans lequel R_{S} et R_{L} ne sont pas identiques, de telle sorte que le produit de réduction, alcool secondaire, de formule R_{S}R_{L}CHOH présente un centre chiral sur le carbone portant la fonction alcool.

Ainsi, la présente invention a enfin pour objet un procédé de réduction énantiosélective d'au moins une cétone prochirale comprenant une réaction de la cétone prochirale avec un agent de réduction à base de bore, en présence d'un composé selon l'invention en quantité catalytiquement efficace.

Selon une variante de ce procédé, le composé selon l'invention est généré in situ.

La cétone prochirale ayant pour formule R_{S}R_{L}CO peut être n'importe quelle cétone prochirale dans laquelle R_{S}R_{L} sont inertes vis-à-vis du bore. R_{S} et R_{L} sont indépendamment l'un de l'autre un radical organique tel que alkyle, aryle ou aralkyle (le terme alkyle est utilisé ici dans son sens le plus large, c'est-à-dire sous forme d'un radical hydrocarboné non aromatique et inclut par conséquent le radical alkényle et le terme aryle signifie un radical hydrocarboné aromatique et inclut par conséquent le radical phényle et naphtyle).

R_{S} et R_{L} peuvent être pris ensemble pour former un cycle avec le carbone de la fonction cétone, tel que notamment la tétralone.

R_{S} et R_{L} peuvent être indépendamment substitués par n'importe quel substituant inerte vis-à-vis du bore tels que alkyle, alcoxy, halogène, etc.

Bien entendu, le caractère énantiosélectif du procédé de réduction de la présente invention dépend dans une certaine mesure de la taille relative de R_{S} et R_{L}.

Les cétones prochirales, plus particulièrement, utilisées dans le procédé selon l'invention, inclut les cétones dialkyles, telles que t-butylméthylcétone, 4-méthyl-2-pentanone, et méthylcyclohexylcétone, et cétonealkylaryle, tels que acétophénone éventuellement substituée, para-méthylacétophénone, parafluoroacétophénone, propiophénone, chloroacétophénone, et 2-acétyl-6-méthoxynapthalène, les cétones cycliques telles que l'α-tétralone et le 2-bromo 2-cyclo-héxène-1-one, etc. Les cétones prochirales qui sont déjà sous forme chirale, par exemple, les intermédiaires de prostaglandine peuvent également convenir.

Les alcools qui sont produits selon le procédé de l'invention peuvent être utilisés en tant que réactifs chiraux tels que 1-phényléthanol, ou en tant qu'intermédiaire d'une synthèse chimique ultérieure, tel que le 1-(6-méthoxy-2-naphtyle) éthanol optiquement actif, un intermédiaire de synthèse pour le naproxène.

Les agents de réduction à base de bore sont généralement choisis parmi les complexes diméthylsulfure-borane, tétrahydrofurane-borane (THF, BH3), N,N-diéthylaniline-borane (DENA, BH₃) et 1,4 thioxane-borane. On préfère le DENA, BH₃.

Le procédé de réduction selon l'invention est mis en oeuvre dans un solvant approprié, un solvant capable de diluer la cétone, mais inerte au bore. De tels solvants peuvent être notamment les solvants non basiques aprotiques, tels que les éthers (tétrahydofurane, tétrahydropyrane, diéthyléther) et les hydrocarbures aromatiques, tels que le benzène ou le toluène. Les solvants préférés sont les éthers et plus particulièrement le tétrahydrofurane.

Les exemples qui suivent sont présentés à titre illustratif et ne sont pas limitatifs de la présente invention.

### EXEMPLES

2 g de nickel de Raney préalablement lavés à l'eau distillé (50 ml x 5) et au THF (50 ml x 5) sont placés en suspension dans 5 ml de THF sous atmosphère d'azote ; ces conditions seront utilisées pour les différentes additions.

200 µl d'une solution de LiBH₄ dans le THF (2M) sont additionnés, après 30 minutes le catalyseur est lavé au THF (10 ml x 2).

Au nickel de Raney anhydre dont la surface a été réduite sont additionnés en 1 heure, 7,4 ml d'une solution BH₃, THF (1M), après 1 h à la température ambiante le catalyseur est lavé au THF (10 ml x 3), on dispose alors d'environ 2 g de Ni₅B (analyse centésimale)

L'amino-alcool (7,3.10⁻⁴ mol) dans 5 ml de THF est additionné, le THF se trouble rapidement, après une nuit à température ambiante, le surnageant est éliminé et le catalyseur est lavé au THF (10 ml x 4) ; on dispose alors d'environ 2 g de Ni₅B_{(1-0,125)} Oxaza_{0,125.}

Réduction. Rapport molaire oxazaborolidine/cétone = 0,1 ; Rapport molaire BH₃/cétone = 1 pour le complexe BH₃,THF ; Rapport molaire BH₃/cétone = 1,3 pour le complexe BH₃, DENA.

A Ni₅B_{(1-0,125)} Oxaza_{0,125} (environ 2 g) sont additionnés 7,3 ml de BH₃, THF, 1 M ou 1,7 ml de DENA (9,5.10⁻³ mole). Après 20 minutes, 7,3.10⁻³ mole de cétone en solution dans le THF (3 ml) sont additionnés lentement à 30°C (1 h). Après 30 minutes supplémentaires, le catalyseur est séparé du surnageant qui est agité avec 20 ml de méthanol pendant 20 minutes, traité avec 8 ml d'HCl (1N) et extrait à l'éther. La solution éthérée est lavée avec une solution d'HCl 1N (uniquement avec la DENA) et avec une solution saturée de NaCl. Après séchage et concentration, l'excès énantiomère est déterminé par chromatographie en phase gazeuse sur colonne capillaire chirale et/ou polarimétrie.

Le catalyseur séparé du surnageant peut être réutilisé directement ou après 1 lavage au THF.

Pour la séparation du catalyseur solide, du mélange réactionnel ou du liquide de lavage, l'arrêt de l'agitateur entraîne la fixation du catalyseur sur l'aimant et le liquide peut facilement être prélevé notamment à la seringue.

En l'absence de barreau aimanté à l'intérieur du ballon, un aimant approché à l'extérieur remplit la même fonction. Cependant même sans aimant, la décantation est très bonne et la séparation solide-liquide est facile et rapide.
1) Catalyseur résultant de la fixation du (1S,2R) (+) -2-amino-1,2-diphényléthanol (Quallich).
   a) Réduction de l'acétophénone (entrées 1,2,3) le complexe avec le THF et le complexe avec la diéthylaniline (DENA) conduisent à des résultats similaires, nettement supérieurs, lors de la 2^{ème} et 3^{ème} utilisation, à ceux obtenus avec le diméthylsulfure borane.
   b) Réduction d'acétophénones substituées (entrées 6 et 7) le complexe DENA, BH₃ se révèle un excellent agent de réduction.
   c) Réduction d'une cycloalcanone (α tétralone) (entrée 8), les propriétés énantiosélectives du catalyseur lors de sa 1^{ère} utilisation sont très bonnes.
   d) Réduction d'une cétone aliphatique (4-méthyl-2-pentanone) (entrée 10), le DENA, BH₃ a un effet indéniable.
2) Catalyseurs résultant de l'addition de la noréphédrine (+) et de la noréphédrine (-). Ces catalyseurs permettent la synthèse de chacun des isomères optiques d'un alcool. Par exemple, la noréphédrine (-) conduit majoritairement au R (+) -1-phényl éthanol, la noréphédrine (+) au S (-)-1-phényl éthanol. En réduisant l'acétophénone avec le DENA (entrée 5), les résultats sont aussi bons avec la noréphédrine qu'avec l'alcool de Quallich.

| Entrée | Composé | Amino-alcool | Complexe, BH₃ | Excès énantiomère (%) | | |
|---|---|---|---|---|---|---|
| | | | | 1ère util. | 2ème | 3ème |
| 1 | Acétophénone | Quallich | THF, BH₃ | 90 | 85 | 75 |
| 2 | Acéthophénone | Quallich | DENA, BH₃ | 89 | 86 | 77 |
| 3 | Acétophénone | Quallich | Diméthylsulfure, BH₃ | 89 | 68 | 67 |
| 4 | Acétophénone | Noréphédrine (-) | THF, BH₃ | 85 | 75 | 63 |
| 5 | Acétophénone | Noréphédrine (+) | DENA, BH₃ | 90 | 83 | 77 |
| 6 | p-Methyl-Acétophénone | Quallich | DENA, BH₃ | 94 | 86 | 85 |
| 7 | p-Fluoro-Acetophénone | Quallich | DENA, BH₃ | 98 | 91 | 90 |
| 8 | α-tétralone | Quallich | DENA, BH₃ | 90 | 58 | 59 |
| 9 | α-tétralone | Noréphédrine (+) | DENA, BH₃ | 81 | 85 | 70 |
| 10 | 4-méthyl-2-pentanone | Quallich | DENA, BH₃ | 87 | 62 | 54 |

| | | | | | | |
|---|---|---|---|---|---|---|
| Quallich : (1S, 2R) (+) -2-amino-1,2-diphénylethanol | | | | | | |
| DENA, BH₃: complexe N,N-diéthylaniline, BH₃ | | | | | | |
| Noréphédrine : C₆H₅CH(OH)CH(CH₃)NH₂ | | | | | | |

## Revendications

1. Composé de type oxazaborolidine fixé sur un matériau choisi parmi le nickel, le cobalt et le fer de Raney.

2. Composé selon la revendication 1, **caractérisé en ce que** le matériau est le nickel de Raney.

3. Composé selon la revendication 2, **caractérisé en ce qu'**il présente la formule (I) suivante : Ni₅B₁₋ₓ(oxaza)ₓ où x est un nombre réel compris exclusivement entre 0 et 0,5 et oxaza présente la formule suivante : 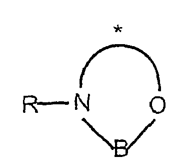 dans laquelle les atomes d'azote et d'oxygène sont reliés, d'une part, par un atome de bore et, d'autre part, par un groupement hydrocarboné, l'étoile correspond à la présence d'au moins un carbone asymétrique dans cedit groupement hydrocarboné, et R représente un atome d'hydrogène ou un radical alkyle, éventuellement le radical représenté par R correspond à un cycle hydrocarboné attaché au groupement hydrocarboné reliant les atomes d'azote et d'oxygène.

4. Composé selon la revendication 3, **caractérisé en ce que** le groupement hydrocarboné reliant les atomes d'azote et d'oxygène est un radical alkyle en C₂ substitué par au moins un radical alkyle ou aryle.

5. Composé selon la revendication 4, **caractérisé en ce que** le groupement oxaza est choisi parmi les groupements de formules suivantes :

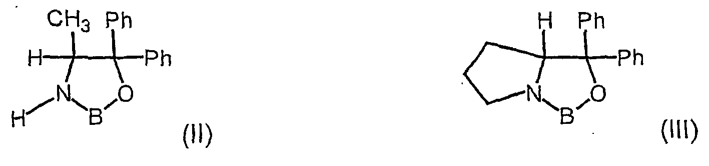

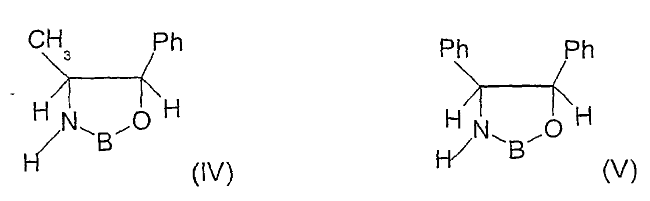

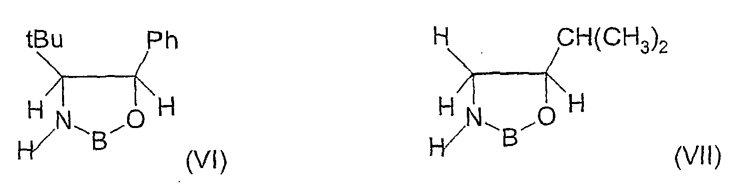

6. Composé selon la revendication 5, **caractérisé en ce que** le groupement oxaza est choisi parmi les groupements de formules (IV), (V), (VI) et (VII) définies dans la revendication 5.

7. Procédé de préparation du composé selon l'une des revendications 1 à 6 qui comprend les étapes suivantes :
- (1) le matériau choisi parmi le nickel de Raney, le cobalt de Raney et le fer de Raney est mis en contact avec BH₃ en présence d'un solvant inerte,
- (2) le produit ainsi obtenu est mis en contact avec au moins un amino-alcool.

8. Procédé selon la revendication 7 **caractérisé en ce que** le matériau utilisé est le nickel de Raney.

9. Procédé selon l'une des revendications 7 ou 8, **caractérisé en ce que** l'amino-alcool utilisé a pour formule générale (VIII) 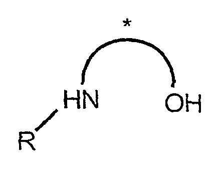 dans laquelle le groupement hydrocarboné reliant les atomes d'azote et d'oxygène et R sont tels que définis dans l'une des revendications 3 ou 4.

10. Procédé selon l'une des revendications 7 à 9, **caractérisé en ce que** l'amino-alcool est choisi parmi le α-diphényl-pyrolidineméthanol, la noréphédrine (+) ou (-), le 2-amino-3-méthyl-1-butanol (S ou R) ; le 2-amino-1,2-diphényléthanol (1R,2S) ou (1S,2R) ; le 2-amino-1,1-diphényl-1-propanol (S ou R) et le 2-amino-3,3-diméthyl-1-butanol (S ou R).

11. Procédé selon l'une des revendications 7 à 10, **caractérisé en ce que** le solvant inerte est choisi parmi le dioxane, le diéthyléther, le tétrahydrofurane, l'hexane, l'heptane, l'octane, le cyclohexane, le benzène, le xylène et le toluène.

12. Utilisation du composé selon l'une des revendications 1 à 6 en tant que catalyseur d'une réaction de réduction de cétone prochirale pour produire des alcools chiraux.

13. Procédé de réduction énantiosélective d'au moins une cétone prochirale comprenant une réaction de la cétone prochirale avec un agent de réduction à base de bore, en présence d'un composé selon l'une des revendications 1 à 6 en quantité catalytiquement efficace.

14. Procédé de réduction selon la revendication 13, **caractérisée en ce que**, selon une variante de ce procédé, le composé selon l'une des revendications 1 à 6 est généré in situ.

15. Procédé de réduction selon la revendication 13 ou 14, **caractérisé en ce que** les agents de réduction à base de bore sont choisis parmi les complexes diméthylsulfure-borane, tétrahydrofurane-borane (THF, BH₃), N,N-diéthylaniline-borane (DENA, BH₃) et 1,4 thioxane-borane.

16. Procédé de réduction selon la revendication 15, **caractérisé en ce que** l'agent de réduction est le DENA, BH₃.

## Patentansprüche

1. Verbindung vom Typ Oxazaborolidin, das an einen Stoff fixiert ist, der aus Raneynickel, -kobalt und -eisen ausgewählt ist.

2. Verbindung nach Anspruch 1, **dadurch gekennzeichnet, dass** der Stoff Raneynickel ist.

3. Verbindung nach Anspruch 2, **dadurch gekennzeichnet, dass** sie die folgende Formel (I) hat: Ni₅B₁₋ₓ(oxaza)ₓ, worin x eine reale Zahl zwischen ausschließlich 0 und 0,5 ist und Oxaza die folgende Formel hat: 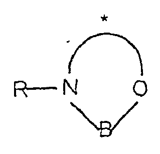 in der das Stickstoffatom und das Sauerstoffatom einerseits durch ein Boratom und andererseits durch eine Kohlenwasserstoffgruppe verbunden sind, der Stern dem Vorhandensein mindestens eines asymmetrischen Kohlenstoffs in dieser Kohlenwasserstoffgruppe entspricht und R ein Wasserstoffatom oder einen Alkylrest darstellt, der durch R dargestellte Rest ggf. einem Kohlenwasserstoffring entspricht, der an die das Stickstoffatom und das Sauerstoffatom verbindende Kohlenwasserstoffgruppe gebunden ist.

4. Verbindung nach Anspruch 3, **dadurch gekennzeichnet, dass** die das Stickstoffatom und das Sauerstoffatom verbindende Kohlenwasserstoffgruppe ein mit mindestens einem Alkyl- oder Arylrest substituierter C₂-Alkylrest ist.

5. Verbindung nach Anspruch 4, **dadurch gekennzeichnet, dass** die Oxazagruppe aus den Gruppen der folgenden Formeln ausgewählt ist:

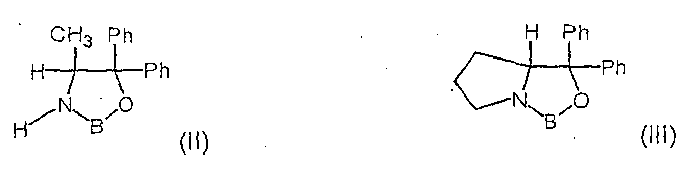

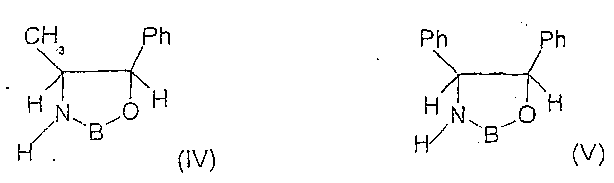

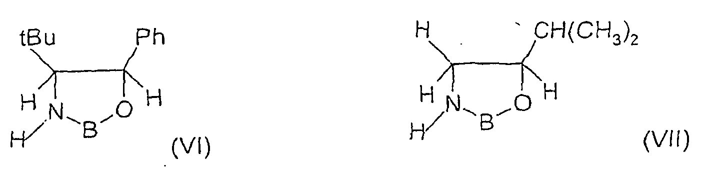

6. Verbindung nach Anspruch 5,_**dadurch gekennzeichnet, dass** die Oxazagruppe aus den Gruppen der im Anspruch 5 definierten Formeln (IV), (V), (VI) und (VII) ausgewählt ist.

7. Verfahren zur Herstellung der Verbindung nach einem der Ansprüche 1 bis 6, das die folgenden Schritte umfasst:
- (1) der aus Raneynickel, Raneykobalt und Raneyeisen ausgewählte Stoff wird in Gegenwart eines inerten Lösungsmittels mit BH₃ in Kontakt gebracht,
- (2) das auf diese Weise erhaltene Produkt wird mit mindestens einem Aminoalkohol in Kontakt gebracht.

8. Verfahren nach Anspruch 7, **dadurch gekennzeichnet, dass** der verwendete Stoff Raneynickel ist.

9. Verfahren nach einem der Ansprüche 7 oder 8, **dadurch gekennzeichnet, dass** der verwendete Aminoalkohol die allgemeine Formel (VIII) hat: 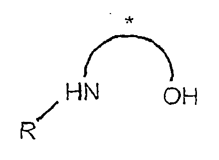 in der die das Stickstoffatom und das Sauerstoffatom verbindende Kohlenwasserstoffgruppe und R von der in einem der Ansprüche 3 oder 4 definierten Art sind.

10. Verfahren nach einem der Ansprüche 7 bis 9, **dadurch gekennzeichnet, dass** der Aminoalkohol aus α-Diphenylpyrolidinmethanol, Norephedin (+) oder (-), 2-Amino-3-methyl-1-butanol (S oder R); 2-Amino-1,2-diphenylethanol (1R, 2S) oder (1S, 2R); 2-Amino-1,1-diphenyl-1-propanol (S oder R) und 2-Amino-3,3-dimethyl-1-butanol (S oder R) ausgewählt ist.

11. Verfahren nach einem der Ansprüche 7 bis 10, **dadurch gekennzeichnet, dass** das inerte Lösungsmittel aus Dioxan, Diethylether, Tetrahydrofuran, Hexan, Heptan, Octan, Cyclohexan, Benzol, Xylol und Toluol ausgewählt ist.

12. Verwendung der Verbindung nach einem der Ansprüche 1 bis 6 als Katalysator einer Reduktionsreaktion von prochiralem Keton zur Erzeugung von chiralen Alkoholen.

13. Verfahren zur enantioselektiven Reduktion von mindestens einem prochiralen Keton, umfassend eine Reaktion des prochiralen Ketons mit einem Reduktionsmittel auf Borbasis in Gegenwart einer Verbindung nach einem der Ansprüche 1 bis 6 in katalytisch wirksamer Menge.

14. Reduktionsverfahren nach Anspruch 13, **dadurch gekennzeichnet, dass** gemäß einer Abwandlung dieses Verfahrens die Verbindung nach einem der Ansprüche 1 bis 6 in situ erzeugt wird.

15. Reduktionsverfahren nach Anspruch 13 oder 14, **dadurch gekennzeichnet, dass** die Reduktionsmittel auf Borbasis ausgewählt sind aus den Komplexen Dimethylsulfid-Boran, Tetrahydrofuran-Boran (THF, BH₃), N,N-Diethylanilin-Boran (DENA, BH₃) und 1,4-Thioxan-Boran.

16. Reduktionsverfahren nach Anspruch 15, **dadurch gekennzeichnet, dass** das Reduktionsmittel DENA, BH₃ ist.

## Claims

1. Compound of the oxazaborolidine type attached to a material selected from Raney nickel, cobalt and iron.

2. Compound as claimed in claim 1, wherein the material is Raney nickel.

3. Compound as claimed in claim 2, **characterised in that** it exhibits the following formula (I): Ni₅B₁₋ₓ(oxaza)ₓ, where x is a real number between 0 and 0.5 exclusive and oxaza exhibits the following formula: 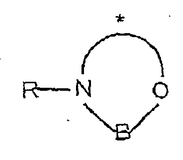 in which the nitrogen and oxygen atoms are linked, on the one hand, via a boron atom and, on the other hand, via a hydrocarbonaceous group, the star corresponds to the presence of at least one asymmetric carbon in said hydrocarbonaceous group, and R represents a hydrogen atom or an alkyl radical, the radical represented by R optionally corresponding to a hydrocarbonaceous ring linked to the hydrocarbonaceous group connecting the nitrogen and oxygen atoms.

4. Compound as claimed in claim 3, **characterised in that** the hydrocarbonaceous group connecting the nitrogen and oxygen atoms is a C₂ alkyl radical substituted by at least one alkyl or aryl radical.

5. Compound as claimed in claim 4, **characterised in that** the oxaza group is selected from the groups of following formulae:

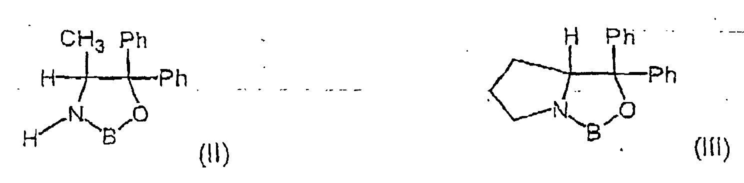

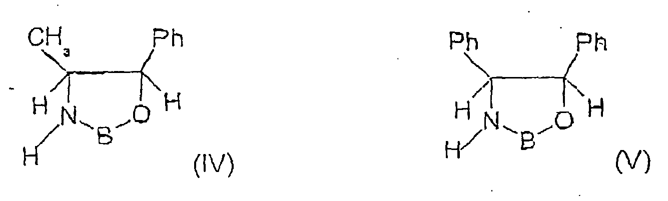

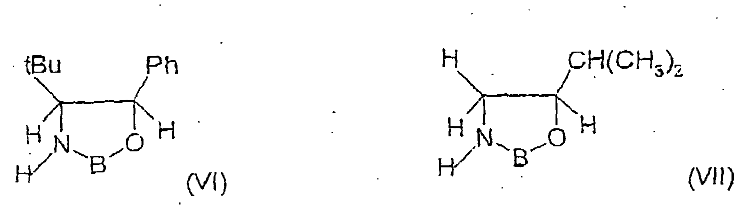

6. Compound as claimed in claim 5, **characterised in that** the oxaza group is selected from the groups of formulae (IV), (V), (VI) and (VII) defined in claim 5.

7. Process for the preparation of the compound as claimed in one of claims 1 to 6 which comprises the following stages: (1) the material selected from Raney nickel, Raney cobalt and Raney iron is brought into contact with BH₃ in the presence of an inert solvent, (2) the product thus obtained is brought into contact with at least one amino-alcohol.

8. Process as claimed in claim 7, **characterised in that** the material used is Raney nickel.

9. Process as claimed in one of claims 7 or 8, **characterised in that** the amino-alcohol used has the general formula (VIII) 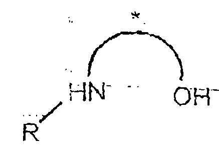 in which the hydrocarbonaceous group connecting the nitrogen and oxygen atoms and R are as defined in one of claims 3 or 4.

10. Process as claimed in one of claims 7 to 9, **characterised in that** the amino-alcohol is selected from α-diphenylpyrrolidinemethanol , (+)- or (-)-norephedrine, (S or R) 2-amino-3-methyl-1-butanol, (1R,2S)- or (1S,2R)-2-amino-1,2-diphenylethanol, (S or R) 2-amino-1,1-diphenyl-1-propanol and (S or R) 2-amino-3,3-dimethyl-1-butanol.

11. Process as claimed in one of claims 7 to 10, **characterised in that** the inert solvent is selected from dioxane, diethyl ether, tetrahydrofuran, hexane, heptane, octane, cyclohexane, benzene, xylene and toluene.

12. Use of the compound as claimed in one of claims 1 to 6 to catalyse a reduction reaction of prochiral ketone to produce chiral alcohols.

13. Process for the enantioselective reduction of at least one prochiral ketone comprising a reaction of the prochiral ketone with a boron-based reducing agent in the presence of a compound as claimed in one of claims 1 to 6 in a catalytically effective amount.

14. Reduction process as claimed in claim 13, **characterised in that**, according to an alternative form of this process, the compound as claimed in one of claims 1 to 6 is generated in situ.

15. Reduction process as claimed in claim 13 or 14, **characterised in that** the boron-based reducing agents are selected from dimethylsulfide-borane, tetrahydrofuran-borane (THF,BH₃), N,N-diethylaniline-borane (DENA,BH₃) and 1,4-thioxane-borane complexes.

16. Reduction process as claimed in claim 15, wherein the reducing agent is DENA.BH₃.
